# EUROPÄISCHE PATENTSCHRIFT

(11) **EP 1 497 591 B1**
(45) Veröffentlichungstag und Bekanntmachung des Hinweises auf die Patenterteilung: **24.10.2007**
(21) Anmeldenummer: 02717021.6
(22) Anmeldetag: 22.04.2002
(51) Int. Cl.: F24D 19/10, G01F 1/26

(54) **VERTEILERVENTIL MIT DURCHFLUSSMESSER FÜR DEN EINBAU IM ZULAUF**
DISTRIBUTION VALVE COMPRISING A FLOWMETER FOR INSTALLING IN AN INLET
SOUPAPE DE DISTRIBUTEUR COMPRENANT UN DEBITMETRE A INTEGRER DANS L'ALIMENTATION

(43) Veröffentlichungstag der Anmeldung: 19.01.2005
(73) Patentinhaber: Ostaco AG, 8902 Urdorf (CH)
(72) Erfinder: FAMOS, Toni, CH-8967 Widen (CH)
(74) Vertreter: Blum, Rudolf Emil
(86) Internationale Anmeldenummer: PCT/IB2002/001382
(87) Internationale Veröffentlichungsnummer: WO 2003/089844

(56) Entgegenhaltungen:
- DE-A- 4 402 752
- DE-A- 10 038 874
- DE-A- 19 608 780
- DE-U- 29 806 215

## Beschreibung

### Technisches Gebiet

Die Erfindung betrifft ein Verteilerventil mit Durchflussmesser sowie eine Verteileranordnung mit einem solchen Verteilerventil gemäss den Oberbegriffen der unabhängigen Patentansprüche.

### Stand der Technik

Verteilerventile mit Durchflussmesser kommen bevorzugterweise dort zum Einsatz, wo der Durchfluss eines Mediums durch ein Rohrleitungssystem für einen längeren Zeitraum auf einen bestimmten Wert eingestellt werden soll und dabei permanent und direkt ablesbar sein soll. Insbesondere auf dem Gebiet der Haustechnik finden solche Verteilerventile zunehmend Verwendung zum Einstellen des Durchflusses von Warmwasser durch einzelne Warmwasser-Heizkreisläufe. Dabei werden bevorzugterweise eine Vielzahl von Verteilerventilen für eine entsprechende Anzahl Heizkreisläufe dadurch gebildet, dass ein Verteilerbalken, welcher als gemeinsames Gehäuse und als gemeinsamer Zulauf für die Verteilerventile dient, mit einer entsprechenden Anzahl von Ventileinheiten bestückt wird. Diese bestehen jeweils aus einer Zweigleitung zum Anschluss an den Zulauf des Heizkreislaufs und einer Einstell- und Messeinheit zum Einstellen und Anzeigen des Durchflusses durch die Zweigleitung, welche in sich direkt gegenüberliegende Gewindebohrungen im Verteilerbalken eingeschraubt werden. Der veränderliche Ventilspalt zur Einstellung der Durchflussmenge durch die Zweigleitung wird dabei zwischen einem von der Einstell- und Messeinheit gebildeten und mit einer Einstellspindel dieser Einheit wirkverbunden Ventilschliesskörper und einem feststehenden Ventilsitzkörper gebildet, und zwar derart, dass durch Drehung der Einstellspindel ein haubenförmiger Ventilschliesskörper axial über das der Einstell- und Messeinheit zugewandte freie Ende der Zweigleitung geschoben wird, wie dies in der DE 100 38 874 A1 gezeigt ist, oder aber ein zylindrischer Ventilschliesskörper, welcher in seinem Innern von dem aus dem Ventilspalt ausströmenden Medium durchströmt wird, in einer von der Zweigleitung wegzeigenden Richtung in eine konusförmige Bohrung in einem Bauteil der Einstell- und Messeinheit eingeschoben wird. Zum Messen und Anzeigen der Durchflussmenge durch die Zweigleitung weist die Einstell- und Messeinheit ein mit einer Anzeigestange verbundenes Anströmglied auf, welches in einem zentralen Strömungskanal angeordnet ist und zusammen mit der Anzeigestange durch die Strömung im Strömungskanal entgegen einer Federkraft verschiebbar ist, wodurch ein Ablesen der Durchflussmenge durch die Zweigleitung an der Anzeigestange möglich ist. Zwischen dem Austritt aus dem Ventilspalt und dem Auftreffen auf das Anströmglied wird die Strömung typischerweise einmal um 90° bis 180 ° umgelenkt.

In der Praxis hat sich gezeigt, dass die heute bekannten und für den Einbau im Zulauf vorgesehenen Verteilerventile mit Durchflussmesser als Absperrventile ungeeignet sind, da diese oft erst direkt vor der Installation aus separat gefertigten und von verschiedenen Herstellern bezogenen Zweigleitungen, Verteilerbalken und Einstell- und Messeinheiten zusammengestellt werden und sich dadurch die Form- und Lagetoleranzen der fertigen Ventile, welche für deren Dichtheit bei Verwendung als Absperrventile unabdingbar sind, kaum sicherstellen lassen.

### Darstellung der Erfindung

Es stellt sich daher die Aufgabe, ein Verteilerventil mit Durchflussmesser sowie eine Verteileranordnung mit einem solchen Verteilerventil zur Verfügung zu stellen, welche die Nachteile des Standes der Technik nicht aufweisen oder diese zumindest teilweise beheben.

Diese Aufgabe wird durch das Verteilerventil gemäss Patentanspruch 1 gelöst.

Ein erster Aspekt der Erfindung betrifft ein Verteilerventil mit Durchflussmesser, welches bevorzugterweise im Zulauf eines Warmwasser-Heizkreislaufs eingebaut wird. Das Verteilerventil umfasst ein Gehäuse, welches gleichzeitig die Zuleitung bildet, eine Zweigleitung, welche vom Gehäuse abgeht und durch welches das Medium, welches von der Zuleitung kommend das Ventil durchströmt, das Verteilerventil verlässt sowie eine Einstell- und Messeinheit zum Einstellen und Anzeigen der Durchflussmenge des Mediums durch die Zweigleitung. Die Einstell- und Messeinheit ist separat vom Gehäuse ausgebildet und derartig an diesem angeordnet, dass sie die Gehäusewandung direkt gegenüber der Zweigleitung durchdringt. Sie weist einen Ventilschliesskörper und eine Einstellspindel auf, mit welcher der Ventilschliesskörper derartig wirkverbunden ist, dass er zusammen mit einem bei bestimmungsgemässem Betrieb gegenüber dem Gehäuse feststehenden Ventilsitzkörper mindestens einen durch Drehung der Einstellspindel einstellbaren Ventilspalt zur Einstellung der Durchflussmenge durch die Zweigleitung bildet. Die Einstell- und Messeinheit weist ein Anströmglied auf, welches in einem Strömungskanal angeordnet ist, der im Betrieb von der gesamten Menge des durch die Zweigleitung abströmenden Mediums durchströmt wird. Dabei ist das Anströmglied derartig im Strömungskanal angeordnet und mit von aussen her ablesbaren Anzeigemittel der Einstell- und Messeinheit wirkverbunden, dass seine Position im Strömungskanal ausgehend von einer Ausgangsposition durch die im Strömungskanal strömende Strömung in Abhängigkeit von der Durchflussmenge veränderbar ist und unterschiedliche Positionen des Anströmglieds im Strömungskanal unterschiedliche Anzeigen der Anzeigemittel bewirken. Hierdurch ist die jeweilige Durchflussmenge durch die Zweigleitung aussen am Ventil ablesbar. Als Ventilsitzkörper wird hier konkret diejenige Körperlichkeit angesehen, die zusammen mit dem Ventilschliesskörper den einstellbaren Ventilspalt bildet und als Ventilspalt derjenige Strömungsquerschnitt, der im Betrieb massgeblich die Durchflussmenge durch die Zweigleitung bestimmt, also im allgemeinen der kleinste Strömungsquerschnitt.

Erfindungsgemäss ist das Verteilerventil derartig ausgestaltet, dass bei bestimmungsgemässem Gebrauch ein feststehender Gehäuseteil der Einstell- und Messeinheit bevorzugterweise stirnseitig über Dichtflächen und/oder über eine Dichtung, wie z.B. einen O-Ring, mit einem bei bestimmungsgemässen Gebrauch des Verteilerventils feststehenden Gehäuseteil der Zweigleitung in abdichtenden Kontakt steht, so dass, insbesondere bei Verteilerventilen, bei denen der Ventilsitzkörper von einem Bauteil der Einstell- und Messeinheit gebildet wird, eine den Ventilspalt umgehende Leckageströmung von der Zuleitung in die Zweigleitung sicher verhindert wird. Auf diese Weise können erfindungsgemässe Verteilerventile mit Durchflussmesser zur Verfügung gestellt werden, welche auf Grund ihrer einwandfreien Schliessfunktion zwischen Zuleitung und Zweigleitung auch als Absperrventile verwendet werden können.

Bevorzugterweise ist das Verteilerventil dabei zudem derartig ausgestaltet, dass das Bauteil, welches die den Strömungskanal begrenzenden Wandungen in dem Bereich bildet, in welchem das Anströmglied im bestimmungsgemässen Betrieb durch die Strömung positioniert werden kann, mindestens teilweise innerhalb des feststehenden Gehäuseteils der Einstell- und Messeinheit angeordnet ist und dass zwischen diesem Bauteil und dem feststehenden Gehäuseteil der Einstell- und Messeinheit eine Abdichtung vorliegt, welche verhindert, dass sich eine den Strömungskanal umgehende Leckageströmung vom Ventilspalt zum Austritt der Zweigleitung ausbilden kann. Diese Abdichtung kann konstruktiv durch geeignete Ausformung und Tolerierung der angrenzenden Teile und/oder mittels Dichtelementen, wie z.B. O-Ringen, erreicht werden. Hierdurch erhält man Verteilerventile der zuvor erwähnten Art mit einer guten Messgenauigkeit.

Zudem ist es von Vorteil, wenn das feststehende Gehäuseteil der Einstell- und Messeinheit radiale oder halbaxiale (d.h. zur Achse der Einstell- und Messeinheit hin geneigte) Durchtrittsöffnungen mit bevorzugterweise kreisrunder oder rechteckiger Form aufweist, durch welche das Medium von der Zuleitung zum Ventilspalt strömen kann. Eine rein radiale Ausgestaltung ermöglicht eine kostengünstige Fertigung dieser Bauteile, die halbaxiale Ausführung führt zu besonders geringen Druckverlusten beim Durchströmen der Durchtrittsöffnungen.

In einer weiteren bevorzugten Ausführungsform des Verteilerventils ist dieses derartig ausgestaltet, dass der Ventilsitzkörper von einem Bauteil der Einstell- und Messeinheit gebildet ist. In noch einer weiteren bevorzugten Ausführungsform des Verteilerventils ist dieses derartig ausgestaltet, dass die Wandungen des Strömungskanals in dem Bereich, in welchem das Anströmglied bei bestimmungsgemässem Betrieb durch die Strömung positioniert werden kann, von einem Bauteil der Einstell- und Messeinheit gebildet sind. Da die Einstell- und Messeinheit als vormontierte Einheit für ein vor Ort zu bildendes Verteilerventil bereitgestellt werden kann, ergibt sich bei diesen Ausführungsformen der Vorteil, dass das gewünschte Regelungsverhalten und/oder die gewünschte Messgenauigkeit des daraus gebildeten Verteilerventils mit Durchflussmesser unabhängig von der Fertigungsgenauigkeit des Gehäuses und der Zweigleitung sichergestellt werden können, so dass sich eine deutliche Qualitätsverbesserung ergibt und gleichzeitig die Toleranzen für das Gehäuse und die Zweigleitung deutlich grosszügiger ausfallen können, was zu einer Kosteneinsparung beiträgt.

In noch einer weiteren bevorzugten Ausführungsform des Verteilerventils nach einem der zuvor erwähnten Aspekte ragt das Bauteil, welches die Wandungen des Strömungskanals in demjenigen Bereich bildet, in dem das Anströmglied bei bestimmungsgemässem Betrieb des Verteilerventils durch die Strömung im Strömungskanal positioniert werden kann, in die Zweigleitung des Verteilerventils hinein. Auf diese Weise ergeben sich relativ kompakte Verteilerventile, welche einen geringen Platzbedarf aufweisen und die Verwendung von rohrförmigen Verteilerbalken geringen Durchmessers als Gehäuse ermöglichen. Bevorzugterweise wird das Verteilerventil dabei konstruktiv derartig ausgestaltet, zum Beispiel durch geeignete Festlegung der Fertigungstoleranzen und/oder durch Verwendung von Dichtelementen wie z.B. O-Ringen, dass zwischen dem Bauteil, welches die Wandungen des Strömungskanals in dem Bereich bildet, in dem das Anströmglied durch die Strömung positioniert werden kann, und der Zweigleitung eine dichte Verbindung vorliegt, so dass eine Umströmung des Strömungskanals und eine daraus resultierende Fehlmessung der Gesamtdurchflussmenge sicher verhindert wird.

In noch einer weiteren bevorzugten Ausführungsform ist das Verteilerventil derartig ausgestaltet, dass das bei bestimmungsgemässem Betrieb vom Ventilspalt zum Strömungskanal strömende Medium über mehrere radiale Öffnungen in der Wandung des Strömungskanals, in Strömungsrichtung gesehen vor dem Anströmglied, in den Strömungskanal eintritt. Es hat sich gezeigt, dass hierdurch eine bessere Ablesegenauigkeit erzielt werden kann.

Bevorzugterweise sind die radialen Öffnungen gleichmässig und mit Vorteil auf einer gemeinsamen axialen Position, bezogen auf die Achse des Strömungskanals, am Umfang des Strömungskanals verteilt angeordnet, wobei es zudem bevorzugt ist, dass alle radialen Öffnungen einen identischen Querschnitt und/oder eine identische Querschnittsform aufweisen. Hierdurch ergibt sich eine weitere Vergleichmässigung der Strömung im Strömungskanal und damit einhergehend eine weitere Verbesserung der Ablesegenauigkeit.

Vorteilhafterweise sind genau zwei, bevorzugterweise genau vier radiale Öffnungen vorhanden, da sich diese mittels radialem Durchbohren des den Strömungskanal in diesem Bereich bildenden Bauteils besonders wirtschaftlich herstellen lassen und einen geringen Strömungswiderstand durch das Verteilerventil ergeben.

In noch einer weiteren bevorzugten Ausführungsform des Verteilerventils ist dieses derartig ausgestaltet, dass der Ventilspalt durch konzentrisches Eintauchen einer konisch geformten Körperlichkeit des Ventilschliesskörpers, und zwar bevorzugterweise mit dem kleineren Durchmesser in Richtung zur Zweigleitung hin zeigend, in eine zylindrische oder konische Bohrung des Ventilsitzkörpers gebildet wird, derart, dass der Ventilspalt in Strömungsrichtung betrachtet ein kreisringförmiger Spalt ist, dessen Spaltbreite mit zunehmendem Eintauchen des Ventilschliesskörpers in die Bohrung des Ventilsitzkörpers abnimmt, bis sie einen Minimalwert aufweist oder gleich Null ist. Hierdurch lassen sich Verteilerventile mit einem besonders feinfühligen Regelungsverhalten bereitstellen.

In noch einer weiteren bevorzugten Ausführungsform des Verteilerventils ist dieses derartig ausgestaltet, dass sich der Querschnitt des Strömungskanals in dem Bereich, in welchem das Anströmglied bei bestimmungsgemässem Betrieb durch das in diesem strömende Medium positioniert werden kann, in Strömungsrichtung erweitert, und zwar bevorzugterweise konus- oder trompetenförmig: Eine derartige Ausgestaltung ermöglicht einen grossen Messbereich mit gleichzeitig hoher Messgenauigkeit bei geringen Durchflussmengen.

In noch einer weiteren bevorzugten Ausführungsform des Verteilerventils werden die Einstellspindel, der Ventilschliesskörper und der Strömungskanal von einem einstückigen Bauteil, bevorzugterweise aus einem einstückigen Kunststoffteil, gebildet, welches bevorzugterweise durch Spritzgiessen hergestellt wurde.

In noch einer weiteren bevorzugten Ausführungsform des Verteilerventils umfassen die Anzeigemittel eine von dem Anströmglied betätigte, insbesondere mit einer Anzeigemarkierung versehenen Anzeigestange sowie ein Einstellorgan zum manuellen Betätigen der Einstellspindel, welches das nach aussen gerichtete freie Ende der Anzeigestange vollständig umschliesst und mindestens teilweise durchsichtig und bevorzugterweise mit einer Skalierung versehen ist, zur Ermöglichung eines Ablesens der jeweiligen Position der Anzeigestange bzw. der Anzeigemarkierung derselben gegenüber dem Einstellorgan und damit der Durchflussmenge durch die Zweigleitung.

Bevorzugterweise ist das Einstellorgan zudem fest mit der Einstellspindel verbunden, wobei die Einstellspindel und das Einstellorgan mit Vorteil von einem einstückigen Bauteil, bevorzugterweise aus einem durchsichtigen Kunststoff, gebildet werden. Auf diese Weise lassen sich besonders kostengünstige Verteilerventile mit Durchflussmesser bereitstellen.

Ein zweiter Aspekt der Erfindung betrifft eine Verteileranordnung mit zwei oder mehr Verteilerventilen gemäss dem ersten Aspekt der Erfindung. Insbesondere bei der Bildung mehrerer Verteilerventile durch Einschrauben von mehreren Einstell- und Messeinheiten in einen ein gemeinsames Gehäuse bildenden Verteilerbalken mit einer entsprechenden Anzahl Zweigleitungen treten die Vorteile der Erfindung besonders deutlich hervor.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 eine Schnittdarstellung durch ein erstes erfindungsgemässes Verteilerventil mit Durchflussmesser;
Fig. 2 eine Schnittdarstellung durch ein zweites erfindungsgemässes Verteilerventil mit Durchflussmesser;
Fig. 3 eine Schnittdarstellung durch ein drittes erfindungsgemässes Verteilerventil mit Durchflussmesser;
Fig. 4 eine Schnittdarstellung durch ein viertes erfindungsgemässes Verteilerventil mit Durchflussmesser; und
Fig. 5 eine Schnittdarstellung durch ein fünftes erfindungsgemässes Verteilerventil mit Durchflussmesser.

### Wege zur Ausführung der Erfindung

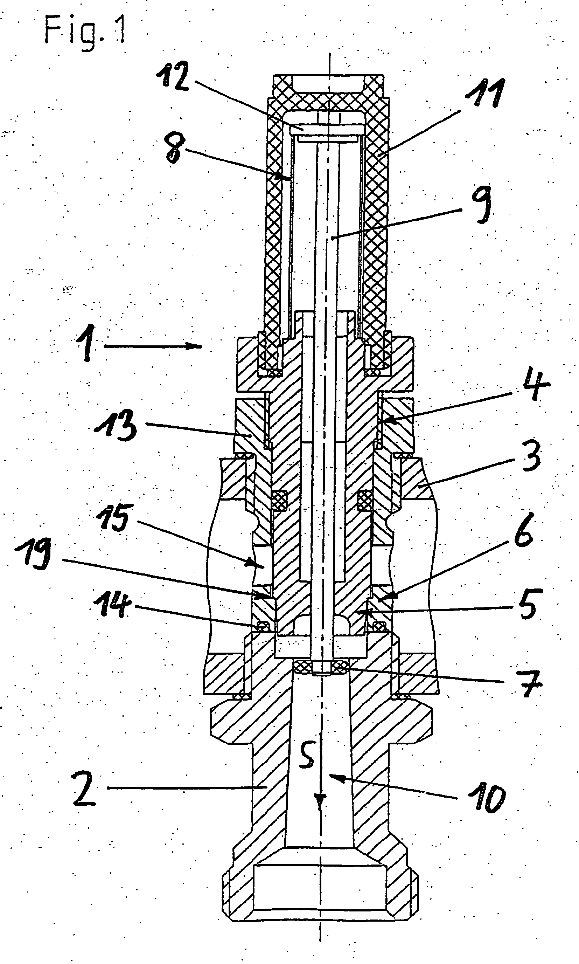

Verschiedene Ausführungen von erfindungsgemässen Verteilerventilen mit Durchflussmesser sind in den Figuren 1 bis 5 dargestellt. Allen dargestellten Verteilerventilen gemeinsam ist, dass sie zur Regulierung der Durchflussmenge durch einen Warmwasser-Heizkreislauf vorgesehen sind und durch Einschrauben einer Einstell- und Messeinheit 1 und einer Zweigleitung 2 von aussen her in zwei sich gegenüberliegende Gewindelöcher eines Vorlauf-Verteilerbalkens 3, der als Gehäuse und Zuleitung dient, gebildet wurden. Die Zweigleitung 2 dient dabei als abführende Leitung und ist im vorliegenden Fall an ihrem freien Ende mit einem Aussengewinde für den Anschluss an die Zulaufleitung des Warmwasser-Heizkreislaufs versehen. Die Einstell- und Messeinheit 1 dient der Einstellung und der Anzeige der Warmwasser-Durchflussmenge durch die Zweigleitung 2 und umfasst bei den dargestellten Verteilerventilen alle Bauteile ausser die Zweigleitung 2 und den das Gehäuse bildenden Verteilerbalken 3. Sie weist bei allen gezeigten Ausführungsformen einen von einer Einstellspindel 4 getragenen konusförmigen Ventilschliesskörper 5 auf, der durch konzentrisches Eintauchen in eine zylindrische Bohrung eines bei bestimmungsgemässem Betrieb gegenüber dem Verteilerbalken 3 feststehenden Ventilsitzkörpers 6 zusammen mit diesem Ventilsitzkörper 6 einen durch Drehung der Einstellspindel 4 einstellbaren Ventilspalt bildet, derart, dass die Ventilspaltbreite mit zunehmendem Eintauchen des Ventilschliesskörpers 5 in die zylindrische Bohrung des Ventilsitzkörpers 6 abnimmt, bis sie einen Minimalwert erreicht. Die eigentliche Abdichtung bei vollständig geschlossenem Ventil erfolgt bei allen dargestellten Verteilerventilen über eine Anschlagschulter 19. Zudem verfügt die Einstell- und Messeinheit 1 bei allen dargestellten Ventilen über ein knopfartiges Anströmglied 7, welches in einem konusförmigen Strömungskanal 10 angeordnet ist, welcher von der gesamten Wassermenge, welche durch die Zweigleitung 2 das Verteilerventil verlässt, durchströmt wird. Das Anströmglied 7 ist mit einer Anzeigestange 9 verbunden, die von einer Spiralfeder 8 mit einer Federkraft entgegen der Durchströmungsrichtung S durch die Zweigleitung 2 beaufschlagt ist. Dabei ist das Anströmglied 7 derartig im Strömungskanal 10 angeordnet, dass es, zusammen mit der Anzeigestange 9, ausgehend von einer Ausgangsposition, in welcher es durch die federbeaufschlagte Anzeigestange 9 bei Nicht-Durchströmung des Strömungskanals 10 positioniert wird, bei Durchströmung des Strömungskanals 10 in Abhängigkeit von der Durchflussmenge entgegen der Federkraft ausgelenkt werden kann, so dass eine bestimmte axiale Position des Anströmglieds 7 und der Anzeigestange 9 im Strömungskanal 10 einer bestimmten Durchflussmenge durch den Strömungskanal 10 entspricht. Das nach aussen gerichtete freie Ende der Anzeigestange 9 weist ein tellerartiges Widerlager 12 für die Feder 8 auf, welches an seinem Umfang farblich markiert ist und somit eine Anzeigemarkierung darstellt, und wird bei allen dargestellten Verteilerventilen von einer durchsichtigen Kunststoffhaube 11 vollständig umschlossen. Diese Kunststoffhaube 11 ist bei allen dargestellten Ventilen fest mit der Einstellspindel 4 verbunden, so dass sie als Einstellörgan zum manuellen Betätigen der Einstellspindel 4 dient und sich beim Drehen derselben axial zusammen mit dieser gegenüber den gehäusefesten Teilen des Verteilerventils verschiebt. Die durchsichtige Kunststoffhaube 11 ist in axialer Richtung mit einer Skalierung (nicht gezeigt) für die Durchflussmenge versehen, so dass die jeweilige Position der Anzeigestange 9 bezüglich der Skalierung auf der Kunststoffhaube 11 und damit auch die Durchflussmenge durch die Zweigleitung 2 von aussen her abgelesen werden kann.

Bei den dargestellten Verteilerventilen wird der Ventilsitzkörper 6 von dem Einstell- und Messeinheitsgehäuse 13 gebildet, welches sämtliche Hauptkomponenten der Einstell- und Messeinheit 1 zu einer Einheit vereinigt und über ein Gewinde fest mit dem Verteilerbalken 3 verbunden ist. Hierdurch ergibt sich der Vorteil, dass zwischen Ventilschliesskörper 5 und Ventilsitzkörper 6 unabhängig von etwaigen Fertigungstoleranzen des Verteilerbalkens 3 und/oder der Zweigleitung 2 immer eine exakte Ausrichtung vorliegt und die Masshaltigkeit dieser Teile auf einfache Weise sichergestellt werden kann, so dass die gewünschte Regelungscharakteristik und Dichtheit immer gewährleistet ist.

Wie deutlich zu erkennen ist, wird der Ventilspalt bei allen dargestellten Verteilerventilen durch Eintauchen des konusförmigen Ventilschliesskörpers 5 in Durchströmungsrichtung S der Zweigleitung 2 bzw. des Strömungskanals 10 in die zylindrische Öffnung des Ventilsitzkörpers 6 gebildet. Bei den dargestellten Verteilerventilen erstreckt sich zudem das feststehende Einstell- und Messeinheitsgehäuse 13, welches bei den in diesen Figuren dargestellten Verteilerventilen den Ventilsitzkörper 6 bildet, vom Ventilspalt in Richtung Zweigleitung 2, und zwar bei den vorliegenden Ausführungen genau bis zur Zweigleitung 2, wo dieses stirnseitig unter Abdichtung mit einem O-Ring 14 druckwasserdicht an die Zweigleitung 2 anstösst. Natürlich sind auch andere Arten der Angrenzung und Abdichtung denkbar, wobei jedoch die gezeigte stirnseitige Variante den Vorteil birgt, dass sie relativ unproblematisch bezüglich Form- und Lageabweichungen der beteiligten Bauteile ist. Der Zufluss von der vom Verteilerbalken 3 gebildeten Zuleitung zu dem von Ventilschliesskörper 5 und Ventilsitzkörper 6 gebildeten Ventilspalt erfolgt bei diesen Verteilerventilen über vier gleichmässig auf einer gemeinsamen axialen Position am Umfang der Einstell- und Messeinheitsgehäuses 13 verteilte kreisrunde radiale Durchtrittsöffnungen 15. Die in den Figuren gezeigte Bauweise ergibt den Vorteil, dass eine Leckageströmung von der Zuleitung 3 zur Zweigleitung 2, welche den eigentlichen Ventilspalt umgehen würde und bei geschlossenem Ventil zu einer Leckage aus der Zweigleitung 2 führen würde, durch die beschriebene Abdichtung zwischen den feststehenden Bauteilen 13, 2 sicher verhindert wird.

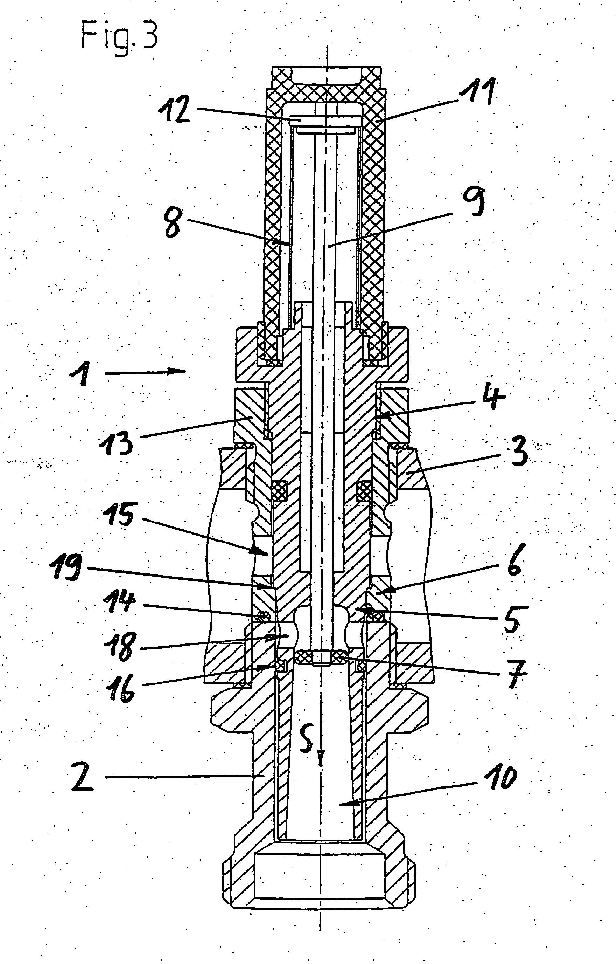

Bei den in den Figuren 3-5 dargestellten Verteilerventilen wird der Strömungskanal 10 von demjenigen Bauteil der Einstell- und Messeinheit 1 gebildet, welches auch den Ventilschliesskörper 5 bildet. Auf diese Weise sind diejenigen Wandungen, welche den Strömungskanal 10 in dem Bereich begrenzen, in welchem das Anströmglied 7 im bestimmungsgemässen Betrieb durch die Strömungskräfte positioniert werden kann und welche deshalb für die Messgenauigkeit von besonderer Bedeutung sind, von einem Bauteil der Einstell- und Messeinheit 1 gebildet, was den Vorteil ergibt, dass zwischen den erwähnten Wandungen des Strömungskanals 10 und dem Anströmglied 7 unabhängig von etwaigen Fertigungstoleranzen des Verteilerbalkens 3 und/oder der Zweigleitung 2 auf einfache Weise eine exakte axiale wie radiale Ausrichtung erreicht und die Masshaltigkeit dieser Teile auf einfache Weise sichergestellt werden kann, so dass eine hohe Messgenauigkeit gewährleistet ist.

Auch wird bei den in den Figuren 3-5 dargestellten Verteilerventilen die Einstellspindel 4, der Ventilschliesskörper 5 und der Strömungskanal 10 von einem einstückigen Kunststoffspritzgussteil gebildet, wodurch solche Verteilerventile aus relativ wenig Einzelteilen bestehen und sich besonders kostengünstig herstellen lassen.

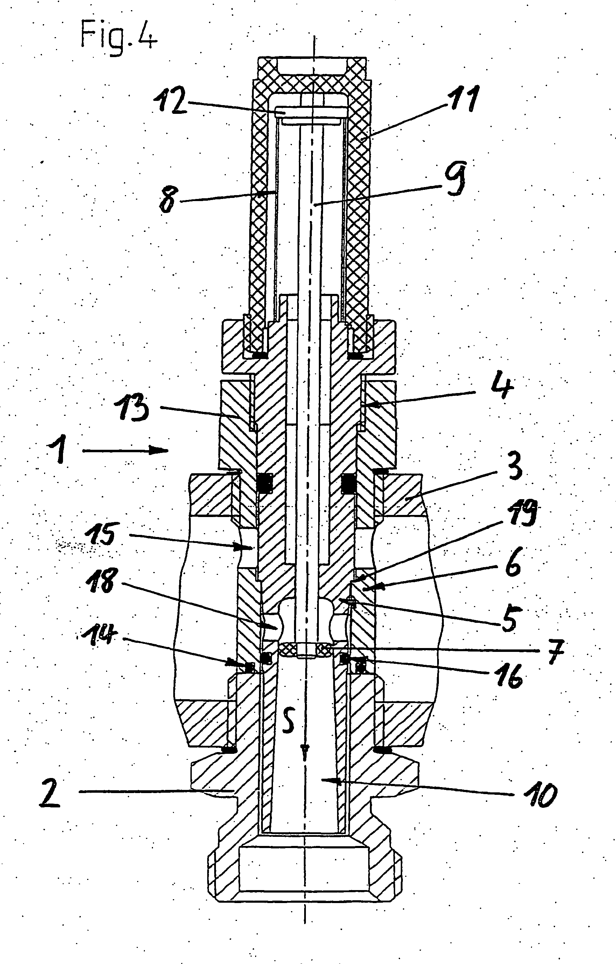

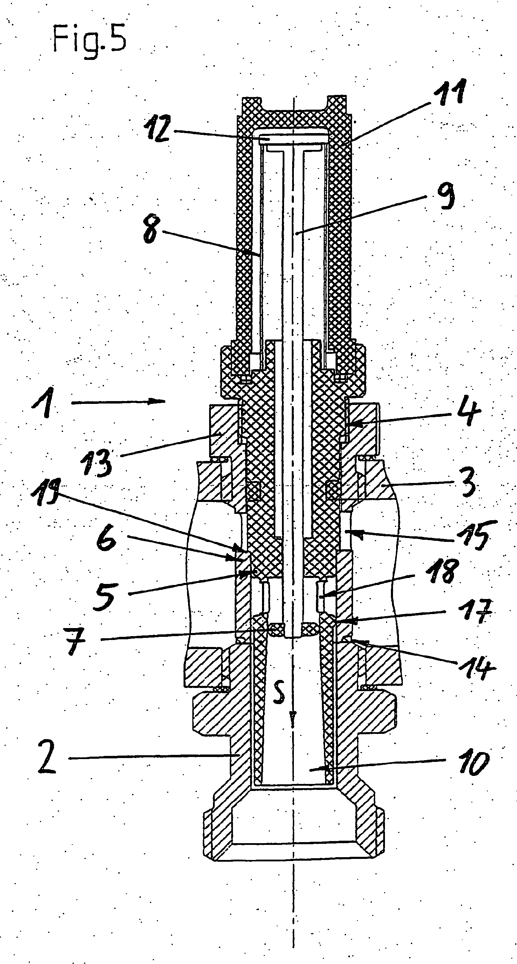

Wie deutlich zu erkennen ist, wird der Strömungskanal 10 bei den in den Figuren 3-5 dargestellten Ventilen ausnahmslos von einem freien Ende mit zylindrischer Aussenkontur des Bauteils gebildet, welches auch den Ventilschliesskörper 5 bildet, wobei dieses freie Ende axial in eine entsprechende zylindrische Bohrung in der Zweigleitung 2 hineinragt. Um die Bildung einer Leckageströmung vom Ventilspalt zum Austritt der Zweigleitung 2 zu verhindern, welche den Strömungskanal 10 umgehen und somit zu einer Fehlmessung führen würde, ist dieses freie Ende so gegenüber der Zweigleitung 2 abgedichtet, dass sowohl eine Rotation als auch eine axiale translatorische Bewegung dieses freien Endes möglich ist, ohne die Abdichtung zu beeinträchtigen. Dieses wird bei der in Fig. 3 gezeigten Ventilvariante durch direktes Angrenzen eines an der zylindrischen Aussenkontur des freien Endes angeordneten Dichtrings 16 an die Wandung einer zylindrischen Bohrung in der Zweigleitung 2 erreicht. Bei den Verteilerventilen der Figuren 4 und 5 erfolgt die Abdichtung hingegen auf indirektem Wege, nämlich derart, dass das freie Ende ebenfalls mittels eines O-Rings 16 (Fig. 4) oder aber mittels eines einstückig mit diesem ausgebildeten Dichtwulstes 17 (Fig. 5) gegenüber dem feststehenden Einstell- und Messeinheitsgehäuse 13 abgedichtet wird, welches Gehäuse 13 wiederum gegenüber der Zweigleitung 2 abgedichtet ist.

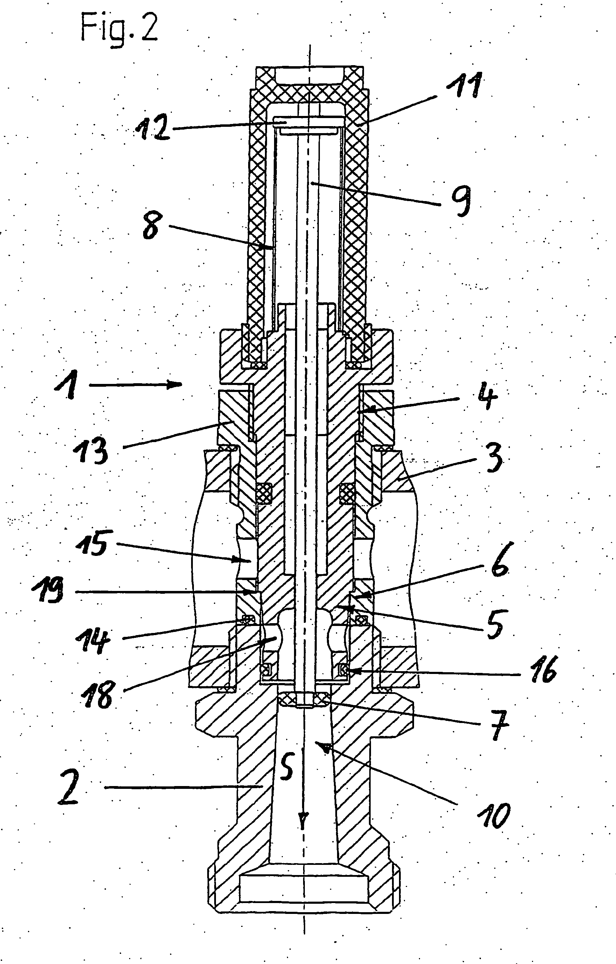

Bei den in den Figuren 2-5 dargestellten Verteilerventilen erfolgt die Einströmung des vom.Ventilspalt kommenden Wassers in den Eintrittsbereich des Strömungskanals 10 über mehrere radiale Öffnungen 18 in der Wandung des Strömungskanals 10, welche in Strömungsrichtung S gesehen vor dem sich bei Nicht-Durchströmung des Strömungskanals 10 in seiner Ausgangsposition befindlichen Anströmglied 7 angeordnet sind. Bei den dargestellten Ausführungsformen sind jeweils zwei bzw. vier radiale Öffnungen 18 mit jeweils identischem Querschnitt und identischer Querschnittsform auf einer gemeinsamen axialen Position gleichmässig am Umfang des Strömungskanals 10 verteilt angeordnet, wobei die in den Figuren 2-3 dargestellten Verteilerventile kreisrunde radiale Öffnungen 18 aufweisen und das in Figur 5 dargestellte Verteilerventil radiale Öffnungen 18 mit im wesentlichen quadratischer Querschnittsform und gerundeten Ecken aufweist. Diese Bauweise führt zu einer besonders gleichmässigen Anströmung des Anströmglieds 7 im Strömungskanal 10, wodurch sich eine beruhigte Anzeige und somit eine gute Ablesbarkeit der Durchflussmenge erzielen lässt.

Bei allen dargestellten Verteilerventilen erfolgt die Strömungsführung zwischen dem Ventilspalt und dem Anströmglied 7 derartig, dass die Strömung nach ihrem Austritt aus dem Ventilspalt und vor ihrem Auftreffen auf das Anströmglied 7 zweimal umgelenkt wird, und zwar zuerst um einen ersten Drehsinn herum von einer im wesentlichen vertikalen Strömungsrichtung in eine erste, im wesentlichen horizontale Strömungsrichtung, mit welcher sie in den Eintrittsbereich des Strömungskanals 10 eintritt und sodann um einen zweiten Drehsinn herum, der dem ersten Drehsinn entgegengesetzt ist, in eine zweite, wieder vertikale Strömungsrichtung, mit welcher sie sodann auf das Anströmglied 7 trifft. Die Strömung wird also zwischen Ventilspalt und Anströmglied 7 S-förmig umgelenkt, was ebenfalls zu einer Beruhigung der Anströmung des Anströmglieds 7 beiträgt, mit den bereits erwähnten vorteilhaften Auswirkungen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verteilerventil mit Durchflussmesser, insbesondere für die Verwendung im Zulauf eines Warmwasser-Heizkreislaufs, mit einem die Zuleitung bildenden Gehäuse (3), einer vom Gehäuse (3) abgehenden Zweigleitung (2) und einer separat vom Gehäuse (3) ausgebildeten und gegenüberliegend der Zweigleitung (2) am Gehäuse (3) angeordneten und die Gehäusewandung durchdringenden Einstell- und Messeinheit (1) zum Einstellen und Anzeigen einer Durchflussmenge eines Mediums durch die Zweigleitung (2), wobei die Einstell- und Messeinheit (1) einen Ventilschliesskörper (5) aufweist, der mit einer Einstellspindel (4) derartig wirkverbunden ist; dass er zusammen mit einem bei bestimmungsgemässem Betrieb gegenüber dem Gehäuse (3) feststehenden Ventilsitzkörper (6) einen durch Drehung der Einstellspindel (4) einstellbaren Ventilspalt zur Einstellung der Durchflussmenge bildet, und wobei die Einstell- und Messeinheit (1) ein Anströmglied (7) umfasst, welches in einem Strömungskanal (10) angeordnet ist, der im Betrieb im wesentlichen von dem gesamten durch die Zweigleitung (2) abströmenden Medium durchströmt wird, wobei die Position des Anströmglieds (7) im Strömungskanal (10) ausgehend von einer Ausgangsposition durch eine vom Ventilspalt zur Zweigleitung (2) strömende Strömung in Abhängigkeit von der Durchflussmenge veränderbar ist und wobei das Anströmglied (7) derartig mit von aussen her ablesbaren Anzeigemitteln (9, 11, 12) der Einstell- und Messeinheit (1) wirkverbunden ist, dass unterschiedliche Positionen des Anströmglieds (7) im Strömungskanal (10) unterschiedliche Anzeigen der Anzeigemittel (9, 11, 12) bewirken, wodurch die jeweilige Durchflussmenge durch die Zweigleitung (2) aussen am Ventil ablesbar ist, **dadurch gekennzeichnet, dass** ein bei bestimmungsgemässem Gebrauch des Verteilerventils feststehender Gehäuseteil (13) der Einstell- und Messeinheit (1) insbesondere stirnseitig über Dichtflächen und/oder über eine Dichtung (14) mit einem bei bestimmungsgemässen Gebrauch des Verteilerventils feststehenden Gehäuseteil der Zweigleitung (2) in abdichtenden Kontakt steht.

2. Verteilerventil nach Anspruch 1, **dadurch gekennzeichnet, dass** das Bauteil, welches die den Strömungskanal (10) begrenzenden Wandungen zumindest in dem Bereich, in welchem das Anströmglied (7) im bestimmungsgemässen Betrieb durch die Strömung positioniert werden kann, bildet, mindestens teilweise innerhalb des feststehenden Gehäuseteils (13) der Einstell- und Messeinheit (1) angeordnet ist und dass dieses Bauteil und der feststehende Gehäuseteil (13) konstruktiv derartig ausgestaltet sind und/oder. Dichtelemente (16) derartig zwischen diesen angeordnet sind, dass eine Ausbildung einer den Strömungskanal (10) umgehende Leckageströmung vom Ventilspalt zum Austritt der Zweigleitung (2) sicher verhindert werden kann.

3. Verteilerventil nach einem der Ansprüche 1 bis 2, **dadurch gekennzeichnet, dass** das feststehende Gehäuseteil (13) der Einstell- und Messeinheit (1) radiale oder halbaxiale Durchtrittsöffnungen (15), insbesondere mit kreisrunder oder rechteckiger Form, aufweist, durch welche das Medium von der Zuleitung zum Ventilspalt strömen kann.

4. Verteilerventil nach einem der vorangehenden Ansprüche, **dadurch gekennzeichnet, dass** der. Ventilsitzkörper (6) von einem Bauteil (13) der Einstell- und Messeinheit (1) gebildet ist.

5. Verteilerventil nach einem der vorangehenden Ansprüche, **dadurch gekennzeichnet, dass** die den Strömungskanal (10) begrenzenden Wandungen zumindest in dem Bereich, in welchem das Anströmglied (7) im bestimmungsgemässen Betrieb durch die Strömung positioniert werden kann, von einem Bauteil (13) der Einstell- und Messeinheit (1) gebildet sind.

6. Verteilerventil nach einem der vorangehenden Ansprüche, **dadurch gekennzeichnet, dass** das Bauteil, welches die den Strömungskanal (10) begrenzenden Wandungen zumindest in dem Bereich, in welchem das Anströmglied (7) im bestimmungsgemässen Betrieb durch die Strömung positioniert werden kann, bildet, in die Zweigleitung (2) hineinragt und insbesondere, dass dieses Bauteil und die Zweigleitung (2) konstruktiv derartig ausgestaltet sind und/oder Dichtelemente (16) derartig zwischen diesen vorhanden sind, dass die Bildung einer den Strömungskanal (10) umgehenden Leckageströmung vom Ventilspalt zum Austritt der Zweigleitung (2) sicher verhindert wird.

7. Verteilerventil nach einem der vorangehenden Ansprüche, **dadurch gekennzeichnet, dass** das Verteilerventil derartig ausgestaltet ist, dass die bei bestimmungsgemässem Betrieb vom Ventilspalt zum Strömungskanal (10) strömende Strömung über mehrere radiale Öffnungen (18) in der Wandung des Strömungskanals (10) in Strömungsrichtung gesehen vor dem Anströmglied (7) in den Strömungskanal (10) eintritt.

8. Verteilerventil nach Anspruch 7, **dadurch gekennzeichnet, dass** die radialen Öffnungen (18) jeweils gleichmässig, insbesondere auf einer gemeinsamen axialen Position, am Umfang des Strömungskanals (10) verteilt angeordnet sind und insbesondere, dass alle Öffnungen (18) einen identischen Querschnitt und/oder eine identische Form aufweisen.

9. Verteilerventil nach einem der Ansprüche 7 bis 8, **dadurch gekennzeichnet, dass** genau zwei oder genau vier radiale Öffnungen (18) vorhanden sind.

10. Verteilerventil nach einem der vorangehenden Ansprüche, **dadurch gekennzeichnet, dass** das Verteilerventil derartig ausgestaltet ist, dass der Ventilspalt durch konzentrisches Eintauchen, insbesondere in Richtung der Durchströmungsrichtung (S) der Zweigleitung (2), einer konisch geformten Körperlichkeit des Ventilschliesskörpers (5) in eine insbesondere zylindrische Bohrung des Ventilsitzkörpers. (6) gebildet wird, derart, dass der Ventilspalt in Strömungsrichtung betrachtet ein kreisringförmiger Spalt ist, dessen Spaltbreite mit zunehmendem Eintauchen des Ventilschliesskörpers (5) in die Bohrung des Ventilsitzkörpers (6) abnimmt, bis sie einen Minimalwert aufweist oder gleich Null ist.

11. Verteilerventil nach einem der vorangehenden Ansprüche, **dadurch gekennzeichnet, dass** sich der Querschnitt des Strömungskanals (10) in dem Bereich, in welchem das Anströmglied (7) bei bestimmungsgemässem Betrieb durch die in diesem strömende Strömung positioniert werden kann, in Strömungsrichtung erweitert, und insbesondere, dass der Strömungskanal (10) in diesem Bereich konusförmig ausgebildet ist.

12. Verteilerventil nach einem der vorangehenden Ansprüche, **dadurch gekennzeichnet, dass** die Einstellspindel (4), der Ventilschliesskörper (5) und der Strömungskanal (10) von einem einstückigen Bauteil gebildet sind, welches insbesondere ein einstückiges Spritzgussteil aus einem Kunststoff ist.

13. Verteilerventil nach einem der vorangehenden Ansprüche, **dadurch gekennzeichnet, dass** die Anzeigemittel (9, 11, 12) eine von dem Anströmglied (7) betätigte, insbesondere mit einer Anzeigemarkierung versehenen Anzeigestange (9) und ein Einstellorgan (11) zum manuellen Betätigen der Einstellspindel (4) umfassen, welches das nach aussen gerichtete freie Ende der Anzeigestange (9) vollständig umschliesst und mindestens teilweise durchsichtig ist und insbesondere mit einer Skalierung versehen ist, zur Ermöglichung eines Ablesens der jeweiligen Position der Anzeigestange (9) gegenüber dem Einstellorgan (11) und damit der Durchflussmenge durch die Zweigleitung (2).

14. Verteilerventil nach Anspruch 13, **dadurch gekennzeichnet, dass** das Einstellorgan (11) fest mit der Einstellspindel (4) verbunden ist und insbesondere, dass die Einstellspindel (4) und das Einstellorgan (11) von einem einstückigen Bauteil, insbesondere aus einem durchsichtigen Kunststoff, gebildet sind.

15. Verteileranordnung umfassend mindestens zwei Verteilerventile nach einem der vorangehenden Ansprüche.

## Claims

1. A distribution valve with a flow meter, particularly for use in the inlet of a hot water heating circuit, comprising a housing (3) forming the feed line, a branch line (2) extending from the housing (3) and an adjusting and measuring unit (1) designed so as to be separate from the housing (3) and arranged on the housing (3) opposite the branch line (2) and penetrating the housing wall, for adjusting and indicating a flow rate of a medium through the branch line (2), the adjusting and measuring unit (1) comprising a valve closing body (5) which is operatively connected to an adjusting spindle (4) in such a way that, together with a valve seat body (6) which during normal operation is fixed relative to the housing (3), it forms a valve gap, adjustable by rotating the adjusting spindle (4), for adjusting the flow rate, and the adjusting and measuring unit (1) including an inflow element (7) which is arranged in a flow duct (10) through which in operation substantially the entire medium flowing out through the branch line (2) flows, the position of the inflow element (7) in the flow duct (10) being variable, starting from an initial position, by a flow flowing from the valve gap to the branch line (2) in dependence on the flow rate, and the inflow element (7) being operatively connected to indicating means (9, 11, 12) of the adjusting and measuring unit (1), readable from the exterior, in such a way that different positions of the inflow element (7) in the flow duct (10) produce different indications of the indicating means (9, 11, 12), whereby the respective flow rate through the branch line (2) is readable on the exterior of the valve, **characterised in that** a housing part (13) of the adjusting and measuring unit (1), which is fixed during normal use of the distribution valve, is in sealing contact particularly at its end face via sealing surfaces and/or via a seal (14) with a housing part of the branch line (2) which is fixed during normal use of the distribution valve.

2. A distribution valve according to Claim 1, **characterised in that** the component which forms the walls defining the flow duct (10), at least in the region in which in normal operation the inflow element (7) may be positioned by the flow, is arranged at least partially within the fixed housing part (13) of the adjusting and measuring unit (1), and **in that** this component and the fixed housing part (13) are structurally designed in such a way, and/or sealing elements (16) are arranged between them in such a way, that the formation of a leakage flow from the valve gap to the exit of the branch line (2) bypassing the flow duct (10) may be reliably prevented.

3. A distribution valve according to one of Claims 1 to 2, **characterised in that** the fixed housing part (13) of the adjusting and measuring unit (1) comprises radial or half-axial passage openings (15), particularly having a circular or rectangular shape, through which the medium is able to flow from the feed line to the valve gap.

4. A distribution valve according to one of the preceding claims, **characterised in that** the valve seat body (6) is formed by a component (13) of the adjusting and measuring unit (1).

5. A distribution valve according to one of the preceding claims, **characterised in that** the walls defining the flow duct (10), at least in the region in which in normal operation the inflow element (7) may be positioned by the flow, are formed by a component (13) of the adjusting and measuring unit (1).

6. A distribution valve according to one of the preceding claims, **characterised in that** the component which forms the walls defining the flow duct (10), at least in the region in which in normal operation the inflow element (7) may be positioned by the flow, projects into the branch line (2), and particularly **in that** this component and the branch line (2) are structurally designed in such a way, and/or sealing elements (16) are present between them in such a way, that the formation of a leakage flow from the valve gap to the exit of the branch line (2) bypassing the flow duct (10) is reliably prevented.

7. A distribution valve according to one of the preceding claims, **characterised in that** the distribution valve is designed in such a way that the flow flowing during normal operation from the valve gap to the flow duct (10) enters the flow duct (10) via several radial openings (18) in the wall of the flow duct (10) upstream of the inflow element (7), viewed in the direction of flow.

8. A distribution valve according to Claim 7, **characterised in that** the radial openings (18) are arranged so as to be each evenly distributed, particularly at a common axial position, on the circumference of the flow duct (10), and particularly **in that** all the openings (18) have an identical cross-section and/or an identical shape.

9. A distribution valve according to one of Claims 7 to 8, **characterised in that** there are precisely two or precisely four radial openings (18).

10. A distribution valve according to one of the preceding claims, **characterised in that** the distribution valve is designed in such a way that the valve gap is formed by concentric immersion, particularly in the direction of the throughflow direction (S) of the branch line (2), of a conically shaped solid body of the valve closing body (5) into a particularly cylindrical bore of the valve seat body (6), such that the valve gap, viewed in the direction of flow, is a circular ring-shaped gap, of which the gap width decreases with increasing immersion of the valve closing body (5) into the bore of the valve seat body (6) until it has a minimum value or is equal to zero.

11. A distribution valve according to one of the preceding claims, **characterised in that** the cross-section of the flow duct (10) widens in the direction of flow in the region in which the inflow element (7) during normal operation may be positioned by the flow flowing therein, and particularly **in that** the flow duct (10) is designed so as to be conical in this region.

12. A distribution valve according to one of the preceding claims, **characterised in that** the adjusting spindle (4), the valve closing body (5) and the flow duct (10) are formed by a single-piece component which is particularly a single-piece injection-moulded part made of a plastics material.

13. A distribution valve according to one of the preceding claims, **characterised in that** the indicating means (9, 11, 12) include an indicator bar (9) operated by the inflow element (7), particularly provided with an indication marking, and an adjusting member (11) for manually operating the adjusting spindle (4), which adjusting member completely encloses the outwardly directed free end of the indicator bar (9) and is at least partly transparent and particularly is provided with a scale, to allow the reading of the particular position of the indicator bar (9) in relation to the adjusting member (11) and hence of the flow rate through the branch line (2).

14. A distribution valve according to Claim 13, **characterised in that** the adjusting member (11) is fixedly connected to the adjusting spindle (4), and particularly **in that** the adjusting spindle (4) and the adjusting member (11) are formed by a single-piece component, particularly made of a transparent plastics material.

15. A distribution arrangement comprising at least two distribution valves according to one of the preceding claims.

## Revendications

1. Soupape de distribution comprenant un débitmètre, en particulier pour l'utilisation dans l'arrivée d'un circuit de chauffage à eau chaude, comprenant un boîtier (3) formant la conduite d'alimentation, une conduite dérivée (2) partant du boîtier (3) et une unité de réglage et de mesure (1) conçue séparément du boîtier (3) et disposée à l'opposé de la conduite dérivée (2) sur le boîtier (3) et traversant la paroi du boîtier, destinée à régler et indiquer un débit d'un milieu à travers la conduite dérivée (2), l'unité de réglage et de mesure (1) comprenant un corps de fermeture de soupape (5), qui est en liaison fonctionnelle avec une broche de réglage (4) de telle sorte qu'il forme conjointement avec un corps de siège de soupape fixe (6) par rapport au boîtier (3), au cours du fonctionnement conventionnel, un passage à travers la soupape pouvant être réglé en tournant la broche de réglage (4), destiné à régler le débit, et l'unité de réglage et de mesure (1) comportant un organe d'arrivée de flux (7), lequel est disposé dans un canal d'écoulement (10), qui, au cours d'un fonctionnement, est traversé sensiblement par l'ensemble du milieu s'écoulant à travers la conduite dérivée (2), la position de l'organe d'arrivée de flux (7) dans le canal d'écoulement (10), en partant d'une position de départ, étant modifiée par un écoulement s'écoulant du passage à travers la soupape à la conduite dérivée (2) en fonction du débit et l'organe d'arrivée de flux (7) étant en liaison fonctionnelle avec des moyens indicateurs (9, 11, 12) de l'unité de réglage et de mesure (1), lisibles de l'extérieur, de telle sorte que différentes positions de l'organe d'arrivée de flux (7) dans le canal d'écoulement (10) donnent différentes indications des moyens indicateurs (9, 11, 12), le débit respectif à travers la conduite dérivée (2) étant lisible de l'extérieur sur la soupape, **caractérisée en ce qu'**une partie de boîtier fixe (13) de l'unité de réglage et de mesure (1), au cours d'un fonctionnement conventionnel de la soupape de distribution, est en contact étanche, en particulier côté frontal, par l'intermédiaire de surfaces d'étanchéité et/ou par l'intermédiaire d'un joint (14) avec une partie de boîtier fixe de la conduite dérivée (2) au cours d'une utilisation conventionnelle de la soupape de distribution.

2. Soupape de distribution selon la revendication 1, **caractérisée en ce que** le composant, lequel forme les parois délimitant le canal d'écoulement (10) au moins dans la zone dans laquelle l'organe d'arrivée de flux (7) peut être positionné à travers l'écoulement, au cours d'un fonctionnement conventionnel, est disposé au moins en partie à l'intérieur de la partie de boîtier fixe (13) de l'unité de réglage et de mesure (1) et **en ce que** ce composant et la partie de boîtier fixe (13) sont construits de telle sorte et/ou les éléments d'étanchéité (16) sont disposés entre ceux-ci de telle sorte qu'une formation d'un écoulement de fuites contournant le canal d'écoulement (10) du passage à travers la soupape à la sortie de la conduite dérivée (2) est empêchée avec fiabilité.

3. Soupape de distribution selon l'une quelconque des revendications 1 à 2, **caractérisée en ce que** la partie de boîtier fixe (13) de l'unité de réglage et de mesure (1) comprend des ouvertures de passage radiales ou semi-radiales (15), présentant en particulier une forme circulaire ou carrée, à travers lesquelles le milieu peut s'écouler de la conduite d'alimentation au passage à travers la soupape.

4. Soupape de distribution selon l'une quelconque des revendications précédentes, **caractérisée en ce que** le corps de siège de soupape (6) est formé par un composant (13) de l'unité de réglage et de mesure (1).

5. Soupape de distribution selon l'une quelconque des revendications précédentes, **caractérisée en ce que** les parois délimitant le canal d'écoulement (10) sont formées, au moins dans la zone dans laquelle l'organe d'arrivée de flux (7) peut être positionné à travers l'écoulement, au cours d'un fonctionnement conventionnel, par un composant (13) de l'unité de réglage et de mesure (1).

6. Soupape de distribution selon l'une quelconque des revendications précédentes, **caractérisée en ce que** le composant, lequel forme les parois délimitant le canal d'écoulement (10) au moins dans la zone dans laquelle l'organe d'arrivée de flux (7), au cours d'un fonctionnement conventionnel, peut être positionné à travers l'écoulement, dépasse dans la conduite dérivée (2) et en particulier **en ce que** ce composant et la conduite dérivée (2) sont construits de telle sorte et/ou les éléments d'étanchéité (16) sont présents entre ceux-ci de telle sorte que la formation d'un écoulement de fuites contournant le canal d'écoulement (10) du passage à travers la soupape à la sortie de la conduite dérivée (2) est empêchée avec fiabilité.

7. Soupape de distribution selon l'une quelconque des revendications précédentes, **caractérisée en ce que** la soupape de distribution est conçue de telle sorte que l'écoulement s'écoulant au cours d'un fonctionnement conventionnel du passage à travers la soupape au canal d'écoulement (10) pénètre par plusieurs ouvertures radiales (18) dans la paroi du canal d'écoulement (10), vue dans la direction d'écoulement, devant l'organe d'arrivée de flux (7) dans le canal d'écoulement (10).

8. Soupape de distribution selon la revendication 7, **caractérisée en ce que** les ouvertures radiales (18) sont disposées en étant réparties respectivement régulièrement, en particulier sur une position axiale commune, sur la périphérie du canal d'écoulement (10) et en particulier **en ce que** toutes les ouvertures (18) présentent une section transversale identique et/ou une forme identique.

9. Soupape de distribution selon l'une quelconque des revendications 7 à 8, **caractérisée en ce que** exactement deux ou exactement quatre ouvertures radiales (18) sont présentes.

10. Soupape de distribution selon l'une quelconque des revendications précédentes, **caractérisée en ce que** la soupape de distribution est conçue de telle sorte que le passage à travers la soupape est formé par enfoncement concentrique, en particulier en direction de la direction de passage (S) de la conduite dérivée (2), d'un aspect corporel de forme conique du corps de fermeture de soupape (5) dans un alésage particulièrement cylindrique du corps de siège de soupape (6), de telle sorte que le passage à travers la soupape, considéré dans la direction d'écoulement, est une fente en forme de couronne circulaire, dont la largeur de fente décroît à mesure que le corps de fermeture de soupape (5) s'enfonce de plus en plus dans l'alésage du corps de siège de soupape (6), jusqu'à ce qu'elle présente une valeur minimale voire nulle.

11. Soupape de distribution selon l'une quelconque des revendications précédentes, **caractérisée en ce que** la section transversale du canal d'écoulement (10) dans la zone dans laquelle l'organe d'arrivée de flux (7), au cours d'un fonctionnement conventionnel, peut être positionné à travers l'écoulement s'écoulant dans celle-ci, s'élargit dans la direction d'écoulement, et en particulier **en ce que** le canal d'écoulement (10) est conçu en forme de cône dans cette zone.

12. Soupape de distribution selon l'une quelconque des revendications précédentes, **caractérisée en ce que** la broche de réglage (4), le corps de fermeture de soupape (5) et le canal d'écoulement (10) sont formés par un composant en une seule pièce, lequel est en particulier une pièce moulée par injection en une seule pièce en matière plastique.

13. Soupape de distribution selon l'une quelconque des revendications précédentes, **caractérisée en ce que** les moyens indicateurs (9, 11, 12) comportent une tige indicatrice (9) actionnée par l'organe d'arrivée de flux (7), dotée en particulier d'un marquage indicateur et un organe de réglage (11) destiné à actionner manuellement la broche de réglage (4), lequel entoure entièrement l'extrémité libre orientée vers l'extérieur de la tige indicatrice (9) et est au moins en partie transparent et est pourvu en particulier d'une échelle, pour permettre de lire la position respective de la tige indicatrice (9) par rapport à l'organe de réglage (11) et de ce fait le débit à travers la conduite dérivée (2).

14. Soupape de distribution selon la revendication 13, **caractérisée en ce que** l'organe de réglage (11) est relié solidement à la broche de réglage (4) et en particulier, **en ce que** la broche de réglage (4) et l'organe de réglage (11) sont formés par un composant en une seule pièce, fabriqué en particulier à partir d'une matière plastique transparente.

15. Soupape de distribution comportant au moins deux soupapes de distribution selon l'une quelconque des revendications précédentes.
